# EUROPEAN PATENT SPECIFICATION

(11) **EP 4 206 258 B1**
(45) Date of publication and mention of the grant of the patent: **06.05.2026**
(21) Application number: 21218334.7
(22) Date of filing: 30.12.2021
(51) Int. Cl.: C08G 67/02, B01J 27/053, B01J 31/24

(54) **A METHOD FOR SYNTHESIS OF POLYKETONE IN HIGH CONVERSION RATE BY USING LOW AMOUNT OF CATALYST**
VERFAHREN ZUR SYNTHESE VON POLYKETON MIT HOHER UMWANDLUNGSRATE UNTER VERWENDUNG EINER GERINGEN MENGE EINES KATALYSATORS
PROCÉDÉ DE SYNTHÈSE DE POLYCÉTONE À TAUX DE CONVERSION ÉLEVÉ EN UTILISANT UNE FAIBLE QUANTITÉ DE CATALYSEUR

(43) Date of publication of application: 05.07.2023
(73) Proprietor: Petkim Petrokimya Holding A.S., Aliaga-Izmir (TR)
(72) Inventor: EZDESIR, Ayhan, Izmir (TR); KARACA, Sila, Izmir (TR); ALPARSLAN, Alp, Izmir (TR); BATI, Bige, Izmir (TR); OZTURK, Turan, Istanbul (TR); EROGLU, Mehmet S., Istanbul (TR); ISCI, Recep, Istanbul (TR); KARAKAYA, Ozan, Istanbul (TR)
(74) Representative: Sevinç, Cenk

(56) References cited:
- JP-A- 2004 059 731
- US-A- 4 894 435
- US-A- 5 010 172
- US-A- 5 714 574
- ASH C.E.: "Alternating olefin/carbon monoxide polymers: a new family of thermoplastics.", INTERNATIONAL J.POLYMERIC MATERIALS, vol. 30, 1995, pages 1 - 13, XP002806735
- BIANCHINI C ET AL: "STUDIES OF LIGAND AND SOLVENT EFFECTS IN THE ALTERNATING COPOLYMERIZATION OF CARBON MONOXIDE AND ETHENE BY PALLADIUM-DIPHOSPHINE CATALYSIS", ORGANOMETALLICS, AMERICAN CHEMICAL SOCIETY, vol. 21, no. 23, 11 November 2002 (2002-11-11), pages 4965 - 4977, XP001132356, ISSN: 0276-7333, DOI: 10.1021/OM020461O

## Description

### Technical field of the Invention

The invention relates to a method for the synthesis of polyketone which is an ethylene-carbon monoxide thermoplastic copolymer in high conversion rate by using low amount of catalyst by means of using solvent system in specific rates formed by methyl ethyl ketone (MEK) and methanol (MeOH) mixture.

### State of the Art

Polyketones in the aromatic polyether class are a family of high-performance thermoplastic polymers. Polyketones are widely used in almost all areas of the industry, including the aircraft and automotive industries, since they have outstanding strength properties, resistance to heat and chemicals, high memory, gas barrier properties, tendency to resist solvents and high abrasion resistance.

Considering the amount of energy required to sustain processes that require large energy expenditures such as polyketone synthesis, the energy loss caused by polyketone synthesis brings along economic and environmental problems. Considering that all reactions to be carried out in order to minimize energy use must be carried out at ambient conditions, that is, at room temperature and atmospheric pressure, the energy losses and global, economic, and environmental damages caused by polyketone syntheses, which include applications requiring high temperature and high pressure, are an undeniable fact.

Palladium (Pd) catalyst is the most common catalyst used in polyketone synthesis. Although catalysts increase the rate of a chemical reaction, the damage caused by the use of Pd catalysts to the environment is an inevitable fact. For this reason, it is of great importance to carry out studies to minimize the use of non-environmentally friendly catalysts when producing new chemicals. In addition to the use of low-rate catalysts, obtaining polyketone with high conversions from low-rate catalysts is of great importance when considered in terms of today's energy consumption problem.

In polyketone syntheses in the state of the art, the resistance of the synthesized polyketones, particularly to heat, is very low due to the use of solvents in wrong forms and ratios. Considering that polyketones are used in almost every field of industry, it is of great importance that they show high resistance to heat.

In a study conducted by S. Chen et al. in the state of the art, polyketone synthesis was carried out with the use of cationic diphosphazene monoxide-palladium complexes in order to increase the processability of polyketone. In this reaction, 0.356 g of polyketone was obtained by using 10 micromoles of Pd catalyst (palladium diphosphazene monoxide) at 110 °C and under 40 bar pressure. As for the solvent, only toluene was used. In this study, although the functionality of polyketone was tried to be increased, it was not successful enough. In addition, it is very difficult to say that a high rate of polymer conversion was achieved with the use of low amount of catalyst in the said study.[1]

In the state of the art, there are no studies aimed at minimizing the use of Pd catalyst in polyketone syntheses. In addition, it is not possible to come across any studies on the synthesis of polyketone at the maximum rate with the use of minimum Pd catalyst in the state of the art. In addition to all these, considering the amount of energy required to maintain processes that require large energy expenditures such as polyketone synthesis, it is also not possible to come across any work in the state of the art to reduce the temperature and pressure parameters in order to minimize the energy use in polyketone synthesis realised in the contemporary techniques. Also, in the studies conducted on polyketone syntheses, it cannot be mentioned that there is a study specific to the solvent used in order to increase the efficiency and product quality in the said polyketone syntheses.

In the prior art, C. E. Ash has studied about alternating olefin/carbon monoxide polymers as a new family of thermoplastics. CARILON^{®} polymers are semicrystalline thermoplastics derived from simple and abundant raw materials of carbon monoxide and ethylene (or other a-olefins.) These new materials have resulted, in part, from a high activity catalyst invention which enables the polymer to be produced with perfectly alternating units of CO and olefin [2].

The patent application no. US4894435A is related to a of producing linear alternating polymers of carbon monoxide and at least one ethylenically unsaturated hydrocarbon in the presence of novel catalyst composition prepared from a palladium compound, a non-transition metal salt of a non-hydrohalogenic acid having a pKa less than 6, bidentate phosphorus ligand and a ketone or ester carboxylic compound. Preferred hydrocarbons are hydrocarbons of 2 to 20 carbon atoms inclusive, more preferably 2 to 10 carbon atoms inclusive. The palladium compound employed in the novel catalyst composition of the invention is a palladium salt of an organic acid, preferably a carboxylic acid of up to about 10 carbon atoms.

Another prior art, patent application no. US5010172A, discloses a process for the production of linear alternating polymer of carbon monoxide and at least one ethylenically unsaturated hydrocarbon comprises contacting the reactants in the presence of a catalyst composition formed from a palladium salt, a bidentate phosphorus ligand, and a tertiary monophosphine or a secondary phosphine oxide present in specified quantity. The palladium salt is the salt of an acid having a pKa below 2 (measured in water at 18° C.).

Another prior art, patent application no. US5714574A, is related to a process for preparing a polyketone, which comprises polymerising together carbon monoxide, ethylene and optionally at least one C3 to C10 alpha-olefin in the presence of a solvent and a catalyst composition derivable from a palladium salt, an anion which is either non-coordinating or weakly coordinating to palladium and a phosphate ligand characterised in that the solvent is either a C4 to C10 tertiary aliphatic alcohol or a mixture of a C4 to C10 tertiary alcohol and up to 80% by volume of an aprotic solvent. The preferred tertiary alcohols are tertiary butyl alcohol and tertiary amyl alcohol. The aprotic solvents can be an aliphatic ketone or cyclic aliphatic ether; preferred aprotic solvents are THF and 1,4-dioxane.

Another prior art, patent application no. JP2004059731A, is related to a catalyst which enables one to industrially, efficiently, and inexpensively produce a high-molecular-weight polyketone polymer without depositing a polymer on a reactor and to provide a method for producing a polyketone by using the catalyst. The catalyst is obtained by reacting (a) a palladium compound adsorbed or supported on a carrier represented by formula (1) with (b) a bidentate ligand having a group 15 atom and (c) and an anion of an acid of a pKa of 4 or below. The method for producing the polyketone comprises copolymerizing carbon monoxide with at least one ethylenically unsaturated compound in the presence of the catalyst.

Due to the reasons such as the limitations and inadequacies of the solutions in the state of the art, the use of low catalysts, as well as the absence of any study in the literature on obtaining polyketone at high conversions from catalysts used at low rates, no study being conducted to minimize the environmental damage of the Pd catalyst used in polyketone syntheses, polyketone syntheses carried out at high temperature and pressure causing a big energy loss problem, no solvent-specific study being conducted in order to increase the polyketone efficiency and product quality of polyketones in the said polyketone syntheses in the state of the art, the development of a method of synthesizing a high conversion polyketone using a low rate of catalyst has become necessary.

### Brief Description and Aims of the Invention

The invention describes a method of synthesizing polyketone, a thermoplastic copolymer of ethylene-carbon monoxide with high conversion, using a low rate of catalyst. By means of the use of a solvent system consisting of a mixture of methyl ethyl ketone (MEK) and methanol (MeOH) at specific rates, polyketone is synthesized with a monomer conversion of 90-98% with the use of low catalysts. In addition, said polyketone synthesis is carried out at low temperature and low pressure.

An aim of the invention is to synthesize a high conversion polyketone with the use of a low rate of catalyst. High conversion polyketone synthesis from low rate Pd catalyst used in the said invention is provided by using MEOH/MEK solvent system at 90/10-10/90 vol% (v/v) ratios. With the use of MeOH/MEK solvent system 90/10-10/90% (v/v) by volume in the said synthesis, the polarity of the polymerization medium is optimized for polymerization and the polymer/catalyst (w/w) conversion efficiency is maximized.

Another aim of the invention is to minimize the environmental damage of the Pd catalyst used in polyketone synthesis. In the present invention, minimizing the damage caused by the Pd catalyst to the environment is achieved by using the MeOH/MEK solvent system at a ratio of 90/10-10/90% (v/v) by volume. With the use of the MeOH/MEK solvent system at the specific ratios by volume, the synthesis of a polyketone with high conversion is achieved despite the use of a minimum amount of catalyst.

With the invention, it is ensured that the large amount of energy losses experienced in polyketone synthesis are prevented by synthesizing polyketone at low temperatures and low pressures. In the present invention, the energy losses in polyketone synthesis are prevented by performing the polyketone synthesis mentioned in the invention at low temperatures and low pressures.

Another aim of the invention is to increase the crystallinity of the polyketone to be synthesized and to provide a more stable and robust form of polyketone to be synthesized. In the invention, the realization of a more stable and robust form of polyketone synthesis by increasing the crystallinity of the polyketone is achieved by using the MeOH/MEK solvent system at 90/10-10/90% (v/v) volume ratios as a solvent in the polyketone synthesis.

### Description of Drawings

**Figure 1****.** FTIR spectrum of the polyketone synthesized in the invention.
**Figure 2****.** DSC thermogram of the polyketone synthesized in the invention.

### Detailed Description of the Invention

The invention relates to a method for the synthesis of polyketone which is an ethylene-carbon monoxide thermoplastic copolymer in high conversion rate by using low amount of catalyst by means of using solvent system in specific rates formed by methyl ethyl ketone (MEK) and methanol (MeOH) mixture. In the present invention, polyketone is synthesized with a monomer conversion at the rate of 90-98% with the use of MEK and MeOH at specific rates as solvents. In addition, said polyketone synthesis is carried out at low temperature and low pressure. Palladium (II) [1,3 bis(diphenylphosphino)propane]-bis(sulphate) (Dppp-PdSO₄) catalyst is used as a catalyst in the present invention.

The synthesis method of polyketone, the ethylene-carbon monoxide thermoplastic copolymer, which is the subject of the invention comprises the process steps of;
I. adding palladium (II) sulfate (PdSO₄), 1,3-bis(diphenylphosphino)propane (Dppp) ligand and MeOH/MEK solvent system in the range of 90/10-10/90 (V/V) by volume to the reactor,
II. synthesis of polyketone by feeding carbon monoxide and ethylene reactives (1-5/25-30) (mol/mol) to the system at a total pressure of 25-35 bar and performing the polymerization by adjusting the reactor temperature to 60-80°C for 4-10 hours,
III. discharging the remaining gas in the system and removing the suspended solution from the reactor,
IV. Filtering the obtained polyketone and washing it with MeOH/MEK solvent system in the range of 90/10-10/90 (V/V) by volume,
V. drying the filtered polyketone in an oven under vacuum.

The synthesis of the Dppp-PdSO₄ catalyst mentioned in the process step I is shown in React. 1 ;

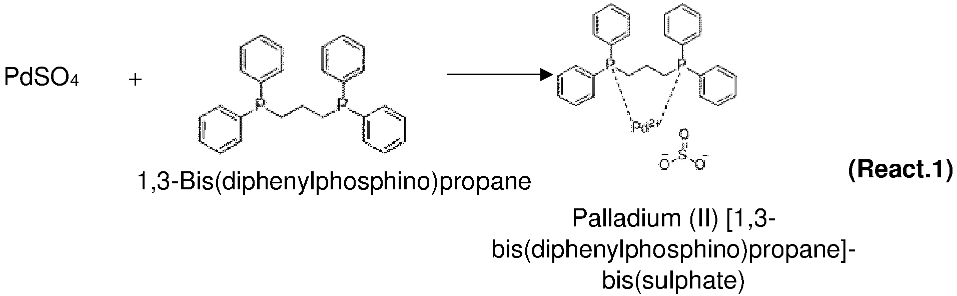

The synthesis of polyketone, a thermoplastic copolymer of ethylene-carbon monoxide, whose synthesis is described in process steps I-V, is shown in React.2;

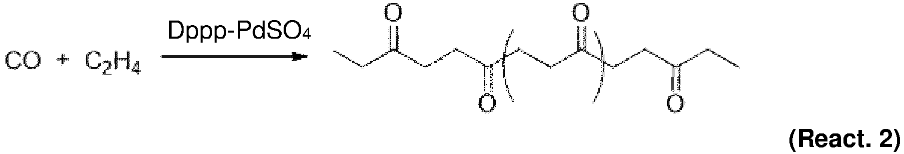

In the synthesis method of polyketone, an ethylene-carbon monoxide thermoplastic copolymer, which is the subject of the invention, Dppp-PdSO₄ catalyst, which is the complex formed by commercial PdSO₄ and Dppp ligands, also known as palladium (II) [1,3-bis(diphenylphosphino)propane]-bis(sulphate) is used as coordination catalyst. In order to find the most suitable processing time for the polymerization reaction mentioned in the method, said polymerization reactions were carried out at 60-80°C and under 25-35 bar pressure at different times, and to synthesize polyketone with high monomer conversion (90-98%) at low pressure and temperature with the use of a low ratio (106 micromol) catalyst, the most suitable polymerization time was determined as 4-10 hours. In the polymerization experiments carried out at different times, the mole ratios (mol/mol) and partial pressures of the carbon monoxide/ethylene gas mixture were kept constant. In addition to this, the ratios of carbon monoxide/ethylene gases, which are accepted as ideal gases, were calculated at room temperature, under 25-35 bar total pressure and taking their partial pressures within 300 cm³ reactor volume into consideration.

In the synthesis of polyketone, an ethylene-carbon monoxide thermoplastic copolymer mentioned in the present invention, a mixture of 10-90% MEK by volume and 90-10% MeOH by volume is used as a solvent system. Since methanol is a polar protic solvent, it increases both the solubility and the coordination function of the catalyst. Since MEK is a molecule in ketone structure, it increases the solubility of the synthesized polyketone in the reaction medium. With the increase in polyketone solubility, polyketones with higher molecular weights are synthesized. In addition, by means of MEK, the number of carbonyl groups that will be added to the polyketone structure is increased. The increase in carbonyl groups provides the synthesis of a more crystalline and stable polyketone. By means of the obtained crystalline and stable structure, the melting point of the synthesized polyketone is increased, and thereby also increasing the durability of the said polyketone. However, it was observed that polyketone conversion began to decrease when the amount of MEK that could be used increased above 25% by volume. As a result, the best efficiency was achieved when a mixture of 25% MEK by volume and 75% MeOH by volume was used as the solvent system in the synthesis of the polyketone, an ethylene-carbon monoxide thermoplastic copolymer, that is the subject of the invention. In the synthesis of polyketone, where the best efficiency is obtained, in other words, a mixture of 25% MEK by volume and 75% MeOH by volume is used as the solvent system, although Dppp-PdSO₄ catalyst is used at the rate of 106 micromol (0.000106 mol), the amount of polyketone synthesized is 4200 mg. Considering the energy consumption problem we are facing today, it is of great importance to provide 90-98% monomer conversion with the use of a 0.000106 mol ratio of Dppp-PdSO₄ catalyst.

By performing the polyketone synthesis mentioned in the present invention at a temperature of 60-80°C and under a pressure of 25-35 bar, energy losses in polyketone synthesis are prevented. The synthesis of polyolefins is carried out at high pressure and temperature when catalyst systems are not used. Synthesis carried out at high pressure and temperature makes reaction control difficult and reducing the product quality, affecting the morphological structure of the product adversely. For this reason, a synthesis reaction was carried out at low pressure and temperature with the use of catalyst. Since the temperature and pressure parameters must be kept at minimum level in order to prevent energy loss in all kinds of processes in the industry, polyketone synthesis performed under low temperature and low pressure provides a substantial amount of energy saving.

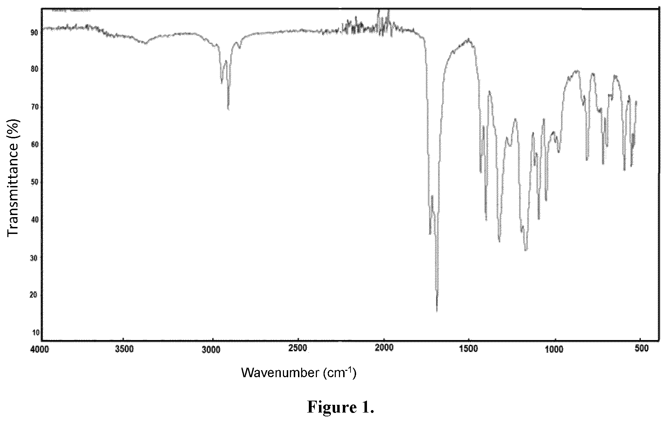

The polyketone synthesized by the method of the invention was characterized by the FTIR spectrum. In Figure 1, FTIR spectrum of the synthesized and purified sample is shown. The spectrum includes all characteristic absorbance wave numbers of the ethylene/carbon monoxide polyketone copolymer. The sharp peak at 1690 cm⁻¹ wave number belonging to carbonyl (C=O) groups that prominently appear in the spectrum indicates that there is a carbon monoxide in the structure of the synthesized polyketone copolymer. In addition, C-H stress peaks are observed in the 2900-3000 cm⁻¹ region. In addition, the C-H bending peaks of the ethylene units were in the 1400-1450 cm⁻¹ region, and the bending peaks of the C-H groups close to the C=O groups were in the 1300-1400 cm⁻¹ region. As a result of all these data, it is understood from the said FTIR spectrum sample that the product synthesized as a result of the reaction is an ethylene/carbon monoxide polyketone copolymer.

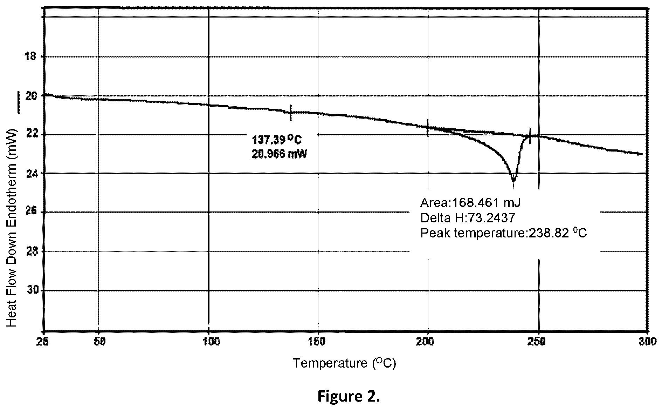

The characterization of the polyketone synthesized by the method of the invention was also made with the DSC thermogram besides FTIR. In Figure 2, the DSC thermogram of the synthesized and purified sample is shown. The endothermic peak seen at 238°C in the DSC thermogram of the synthesized and purified polyketone belongs to the melting temperature of the said polyketone copolymer. Considering that the melting temperature of low density polyethylene in the literature is approximately 120°C, the endothermic peak observed at 238°C is a result of the high crystallinity obtained as a result of the increase in polarity with the introduction of carbon monoxide into the structure of the polyketone. The melting temperature and melting enthalpy of the copolymer can be adjusted to the desired temperature by changing the ethylene/carbon monoxide ratio in the structure. The melting enthalpy of the product was measured as 168 mJ/g.

### REFERENCES

**1.** Chen, S. Y., Pan, R. C., Chen, M., Liu, Y., Chen, C., & Lu, X. B. (2021). Synthesis of Nonalternating Polyketones Using Cationic Diphosphazane Monoxide-Palladium Complexes. Journal of the American Chemical Society, 143(28), 10743-10750. https://doi.org/10.1021/jacs.1c04964
**2.** C. E. Ash (1995) Alternating Olefin/Carbon Monoxide Polymers: A New Family of Thermoplastics, International Journal of Polymeric Materials and Polymeric Biomaterials, 30:1-2, 1-13, DOI: 10.1080/00914039508031458

## Claims

1. A method for high conversion polyketone synthesis with the use of minimum catalyst, comprising the process steps of:
I. adding palladium (II) sulfate (PdSO₄), 1,3-bis(diphenylphosphino)propane (Dppp) ligand and methanol/methyl ethyl ketone (MeOH/MEK) solvent system in the range of 90/10-10/90 (V/V) by volume to the reactor,
II. synthesis of polyketone by feeding carbon monoxide and ethylene reactives (1-5/25-30) (mol/mol) to the system at a total pressure of 25-35 bar and performing the polymerization by adjusting the reactor temperature to 60-80°C for 4-10 hours,
III. discharging the remaining gas in the system and removing the suspended solution from the reactor,
IV. Filtering the obtained polyketone and washing it with methanol/methyl ethyl ketone (MeOH/MEK) solvent system in the range of 90/10-10/90 (V/V) by volume,
V. drying the filtered polyketone in an oven under vacuum.

2. A method according to claim 1, wherein said methanol/methyl ethyl ketone (MeOH/MEK) solvent system in the process step I comprises 25% MEK and 75% MeOH by volume.

## Patentansprüche

1. Verfahren zur Polyketonsynthese mit hoher Umwandlung unter Verwendung eines minimalen Katalysators, umfassend die folgenden Verfahrensschritte:
I. Zugabe von Palladium(II)-sulfat (PdSO4), 1,3-Bis(diphenylphosphino)-propan (Dppp)-Ligand und Methanol/Methylethylketon (MeOH/MEK)-Lösungsmittelsystem im Bereich von 90/10- 10/90 (V/V) nach Volumen zum Reaktor,
II. Synthese von Polyketon durch Einspeisung von Kohlenmonoxid und Ethylenreagenzien (1-5/25-30) (mol/mol) in das System bei einem Gesamtdruck von 25-35 bar und Durchführung der Polymerisation durch Einstellung der Reaktortemperatur auf 60-80°C für 4-10 Stunden,
III. Ablassen des restlichen Gases im System und Entfernen der suspendierten Lösung aus dem Reaktor,
IV. Filtrieren des erhaltenen Polyketons und Waschen mit dem Lösungsmittelsystem Methanol/Methylethylketon (MeOH/MEK) im Volumenbereich 90/10-10/90 (V/V),
V. Trocknen des gefilterten Polyketons im Ofen unter Vakuum.

2. Verfahren nach Anspruch 1, wobei das Methanol/Methylethylketon (MeOH/MEK)-Lösungsmittelsystem im Verfahrensschritt l 25 Volumenprozent MEK und 75 Volumenprozent MeOH umfasst.

## Revendications

1. Procédé de synthèse de polycétones à haute conversion avec utilisation d'une quantité minimale de catalyseur, comprenant les étapes suivantes :
I. ajout de sulfate de palladium (II) (PdSO₄), un ligand 1,3-bis(diphénylphosphino)propane (Dppp) et un système de solvants méthanol/méthyléthylcétone (MeOH/MEK) dans une proportion comprise entre 90/10 et 10/90 (V/V) en volume dans le réacteur,
II. synthèse de polycétone en introduisant des réactifs de monoxyde de carbone et d'éthylène (1-5/25-30) (mol/mol) dans le système à une pression totale de 25-35 bars et en effectuant la polymérisation en ajustant la température du réacteur à 60-80°C pendant 4-10 heures,
III. évacuation du gaz restant dans le système et retrait de la solution en suspension du réacteur,
IV. filtration du polycétone obtenu et son lavage avec un système de solvants méthanol/méthyléthylcétone (MeOH/MEK) dans une proportion de 90/10 à 10/90 (V/V) en volume,
V. sécher du polycétone filtré dans un four sous vide.

2. Procédé selon la revendication 1, dans lequel ledit système de solvants méthanol/méthyléthylcétone (MeOH/MEK) dans l'étape de procédé I comprend 25 % de MEK et 75 % de MeOH en volume.
